(19) Europäisches Patentamt
European Patent Office
Office européen des brevets

(11) EP 0 989 806 B1

(12) EUROPÄISCHE PATENTSCHRIFT

(45) Veröffentlichungstag und Bekanntmachung des Hinweises auf die Patenterteilung:
**23.04.2003 Patentblatt 2003/17**

(21) Anmeldenummer: **98934917.0**

(22) Anmeldetag: **05.06.1998**

(51) Int Cl.$^7$: **A01N 47/24**, A01N 43/08, A01N 37/50
// (A01N47/24, 43:08), A01N37:46, A01N43:08, A01N37:50, A01N37:50, A01N37:46

(86) Internationale Anmeldenummer:
**PCT/EP98/03367**

(87) Internationale Veröffentlichungsnummer:
**WO 98/058544 (30.12.1998 Gazette 1998/52)**

(54) **FUNGIZIDE MISCHUNGEN**

FUNGICIDE MIXTURES

MELANGES FONGICIDES

(84) Benannte Vertragsstaaten:
**AT BE CH DE DK ES FI FR GB GR IE IT LI NL PT SE**
Benannte Erstreckungsstaaten:
**SI**

(30) Priorität: **19.06.1997 DE 19725947**

(43) Veröffentlichungstag der Anmeldung:
**05.04.2000 Patentblatt 2000/14**

(73) Patentinhaber: **BASF AKTIENGESELLSCHAFT**
**67056 Ludwigshafen (DE)**

(72) Erfinder:
- **SCHELBERGER, Klaus**
  **D-67161 Gönnheim (DE)**
- **SCHERER, Maria**
  **D-76829 Landau (DE)**
- **SAUTER, Hubert**
  **D-68167 Mannheim (DE)**
- **MÜLLER, Bernd**
  **D-67227 Frankenthal (DE)**
- **BIRNER, Erich**
  **D-67317 Altleiningen (DE)**
- **LEYENDECKER, Joachim**
  **D-68526 Ladenburg (DE)**
- **AMMERMANN, Eberhard**
  **D-64646 Heppenheim (DE)**
- **LORENZ, Gisela**
  **D-67434 Neustadt (DE)**
- **STRATHMANN, Siegfried**
  **D-67117 Limburgerhof (DE)**

(56) Entgegenhaltungen:
**EP-A- 0 741 970**
**WO-A-96/01256**
**WO-A-96/03047**
**WO-A-97/00011**

- **"AZOXYSTROBIN COMPOSITIONS" RESEARCH DISCLOSURE, Nr. 390, 10. Oktober 1996, Seiten 672-4, XP000639940**

EP 0 989 806 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die vorliegende Erfindung betrifft fungizide Mischungen, welche mindestens einen Wirkstoff ausgewählt aus

$a_1$) Carbamaten der Formel Ia,

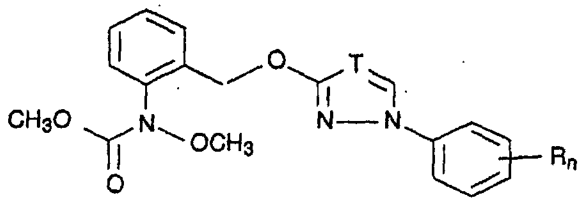

(Ia)

in der T CH oder N bedeutet, n für 0, 1 oder 2 steht und R Halogen, $C_1$-$C_4$-Alkyl oder $C_1$-$C_4$-Halogenalkyl bedeutet, wobei die Reste R verschieden sein können, wenn n für 2 steht,

und

b) mindestens einen Wirkstoff der Formeln II.1 bis II.5,

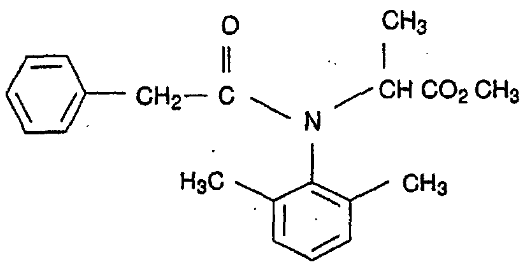

(II.1)

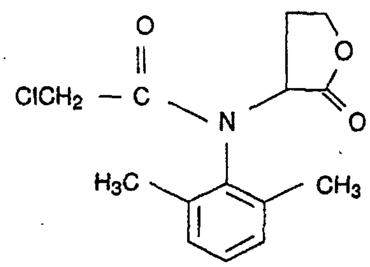

(II.2.)

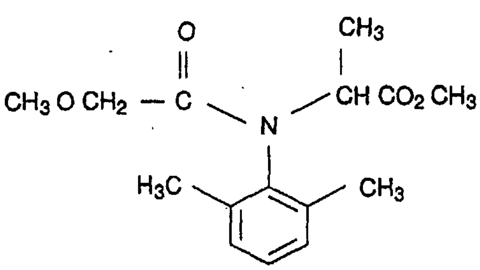

(II.3)

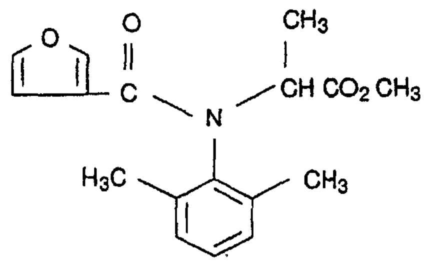

(II.4)

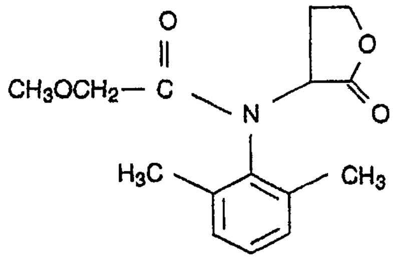

(II.5)

in einer synergistisch wirksamen Menge enthalten.

Außerdem betrifft die Erfindung Verfahren zur Bekämpfung von Schadpilzen mit Mischungen der Verbindungen I und II und die Verwendung der Verbindungen Ia und II zur Herstellung derartiger Mischungen.

Die Verbindungen der Formel Ia, ihre Herstellung und ihre Wirkung gegen Schadpilze sind aus der Literatur bekannt (WO-A 96/01,256 und 96/01,258).

Die Verbindung II.1. ist unter dem common name Benalaxyl bzw. dem Handelsnamen Galben™ kommerziell erhältlich.

Die Verbindung II.2. ist unter dem common name Ofurace bzw. dem Handelsnamen Celtan™ P in Form von Mischungen mit Cymoxanil und Folpet kommerziell erhältlich.

Die Verbindung II.3. ist unter dem common name Metalaxyl bzw. dem Handelsnamen Ridomil™ kommerziell erhältlich.

Die Verbindung II.4. ist unter dem common name Furalaxyl bzw. dem Handelsnamen Fongaride™ kommerziell erhältlich.

Die Verbindung der Formel II.5. ist unter dem common name Oxadixyl bekannt und unter dem Handelsnamen Sandofan™ C in Mischungen mit Kupfersalzen kommerziell erhältlich.

Verfahren zur Herstellung der Verbindungen der Formel II sind dem Fachmann an sich bekannt und bedürfen daher hier keiner weiteren Erwähnung.

Im Hinblick auf eine Senkung der Aufwandmengen und eine Verbesserung des Wirkungsspektrums der bekannten Verbindungen lagen der vorliegenden Erfindungen Mischungen als Aufgabe zugrunde, die bei verringerter Gesamtmenge an ausgebrachten Wirkstoffen eine verbesserte Wirkung gegen Schadpilze zeigen (synergistische Mischungen).

Demgemäß wurden die eingangs definierten Mischungen gefunden. Es wurde außerdem gefunden, daß sich bei gleichzeitiger gemeinsamer oder getrennter Anwendung der Verbindungen Ia und II oder bei Anwendung der Verbindungen Ia und II nacheinander Schadpilze besser bekämpfen lassen als mit den Einzelverbindungen.

Die Formel Ia repräsentiert insbesondere Carbamate, in denen die Kombination der Substituenten einer Zeile der folgenden Tabelle entspricht:

Tabelle 1:

| Nr. | T | $R_n$ |
|---|---|---|
| I.1 | N | 2-F |
| I.2 | N | 3-F |
| I.3 | N | 4-F |
| I.4 | N | 2-Cl |
| I.5 | N | 3-Cl |
| I.6 | N | 4-Cl |
| I.7 | N | 2-Br |
| I.8 | N | 3-Br |

Tabelle 1: (fortgesetzt)

| Nr. | T | $R_n$ |
|---|---|---|
| I.9 | N | 4-Br |
| I.10 | N | 2-$CH_3$ |
| I.11 | N | 3-$CH_3$ |
| I.12 | N | 4-$CH_3$ |
| I.13 | N | 2-$CH_2CH_3$ |
| I.14 | N | 3-$CH_2CH_3$ |
| I.15 | N | 4-$CH_2CH_3$ |
| I.16 | N | 2-$CH(CH_3)_2$ |
| I.17 | N | 3-$CH(CH_3)_2$ |
| I.18 | N | 4-$CH(CH_3)_2$ |
| I.19 | N | 2-$CF_3$ |
| I.20 | N | 3-$CF_3$ |
| I.21 | N | 4-$CF_3$ |
| I.22 | N | 2,4-$F_2$ |
| I.23 | N | 2,4-$Cl_2$ |
| I.24 | N | 3,4-$Cl_2$ |
| I.25 | N | 2-Cl, 4-$CH_3$ |
| I.26 | N | 3-Cl, 4-$CH_3$ |
| I.27 | CH | 2-F |
| I.28 | CH | 3-F |
| I.29 | CH | 4-F |
| I.30 | CH | 2-Cl |
| I.31 | CH | 3-Cl |
| I.32 | CH | 4-Cl |
| I.33 | CH | 2-Br |
| I.34 | CH | 3-Br |
| I.35 | CH | 4-Br |
| I.36 | CH | 2-$CH_3$ |
| I.37 | CH | 3-$CH_3$ |
| I.38 | CH | 4-$CH_3$ |
| I.39 | CH | 2-$CH_2CH_3$ |
| I.40 | CH | 3-$CH_2CH_3$ |
| I.41 | CH | 4-$CH_2CH_3$ |
| I.42 | CH | 2-$CH(CH_3)_2$ |
| I.43 | CH | 3-$CH(CH_3)_2$ |
| I.44 | CH | 4-$CH(CH_3)_2$ |
| I.45 | CH | 2-$CF_3$ |
| I.46 | CH | 3-$CF_3$ |

Tabelle 1: (fortgesetzt)

| Nr. | T | $R_n$ |
|---|---|---|
| I.47 | CH | 4-$CF_3$ |
| I.48 | CH | 2,4-$F_2$ |
| I.49 | CH | 2,4-$Cl_2$ |
| I.50 | CH | 3,4-$Cl_2$ |
| I.51 | CH | 2-Cl, 4-$CH_3$ |
| I.52 | CH | 3-Cl 4-$CH_3$ |

Besonders bevorzugt werden die Verbindungen I.12, I.23, I.32 und I.38.

Die vorliegende Erfindung erfaßt sowohl binäre Mischungen aus Wirkstoffen der Formel I mit einer der Verbindungen II.1. bis II.5. als auch Mischungen, die mehrere Wirkstoffe der Formel I und/oder mehrere Wirkstoffe der Formel II enthalten.

Mischungen von einem oder mehreren Wirkstoffen der Formel Ia und einem oder mehreren Wirkstoffen der Formeln II.1.bis II.5. haben sich in einigen Fällen als besonders vorteilhaft erwiesen.

Die Verbindungen der Formel Ia können in Bezug auf die C=Y- bzw. C=CH- oder C=N-Doppelbindungen in der E- oder der Z-Konfiguration (in Bezug auf die Carbonsäurefunktion) vorliegen. Demgemäß können sie in der erfindungsgemäßen Mischung jeweils entweder als reine E- oder Z-Isomere oder als E/Z-Isomerenmischung Verwendung finden. Bevorzugt findet die E/Z-Isomerenmischung oder das Z-Isomer Anwendung, wobei das Z-Isomere besonders bevorzugt ist.

Die C=N-Doppelbindungen der Oximethergruppierungen in der Seitenkette der Verbindungen Ia können jeweils als reine E- oder Z-Isomere oder als E/Z-Isomerengemische vorliegen. Die Verbindungen Ia können sowohl als Isomerengemische als auch als reine Isomere in den erfindungsgemäßen Mischungen verwendet werden. Im Hinblick auf ihre Verwendung werden insbesondere Verbindungen Ia bevorzugt, in denen die endständige Oximethergruppierung der Seitenkette in der cis-Konfiguration vorliegt ($OCH_3$ zu ZR').

Die Verbindungen Ia sind wegen ihres basischen Charakters in der Lage, mit anorganischen oder organischen Säuren oder mit Metallionen Salze oder Addukte zu bilden.

Beispiele für anorganische Säuren sind Halogenwasserstoffsäuren wie Fluorwasserstoff, Chlorwasserstoff, Bromwasserstoff und Jodwasserstoff, Schwefelsäure, Phosphorsäure und Salpetersäure.

Als organische Säuren kommen beispielsweise Ameisensäure, Kohlensäure und Alkansäuren wie Essigsäure, Trifluoressigsäure, Trichloressigsäure und Propionsäure sowie Glycolsäure, Thiocyansäure, Milchsäure, Bernsteinsäure, Zitronensäure, Benzoesäure, Zimtsäure, Oxalsäure, Alkylsulfonsäuren (Sulfonsäuren mit geradkettigen oder verzweigten Alkylresten mit 1 bis 20 Kohlenstoffatomen), Arylsulfonsäuren oder -disulfonsäuren (aromatische Reste wie Phenyl und Naphthyl welche eine oder zwei Sulfonsäuregruppen tragen), Alkylphosphonsäuren (Phosphonsäuren mit geradkettigen oder verzweigten Alkylresten mit 1 bis 20 Kohlenstoffatomen), Arylphosphonsäuren oder -diphosphonsäuren (aromatische Reste wie Phenyl und Naphthyl welche eine oder zwei Phosphorsäurereste tragen), wobei die Alkyl- bzw. Arylreste weitere Substituenten tragen können, z.B. p-Toluolsulfonsäure, Salizylsäure, p-Aminosalizylsäure, 2-Phenoxybenzoesäure, 2-Acetoxybenzoesäure etc., in Betracht.

Als Metallionen kommen insbesondere die Ionen der Elemente der zweiten Hauptgruppe, insbesondere Calzium und Magnesium, der dritten und vierten Hauptgruppe, insbesondere Aluminium, Zinn und Blei, sowie der ersten bis achten Nebengruppe, insbesondere Chrom, Mangan, Eisen, Kobalt, Nickel, Kupfer, Zink und andere in Betracht. Besonders bevorzugt sind die Metallionen der Elemente der Nebengruppen der vierten Periode. Die Metalle können dabei in den verschiedenen ihnen zukommenden Wertigkeiten vorliegen.

Bevorzugt setzt man bei der Bereitstellung der Mischungen die reinen Wirkstoffe Ia und II.1 bis II.5. ein, denen man je nach Bedarf weitere Wirkstoffe gegen Schadpilze oder andere Schädlinge wie Insekten, Spinntiere oder Nematoden, oder auch herbizide oder wachstumsregulierende Wirkstoffe oder Düngemittel beimischen kann.

Die Verbindungen der Formeln II.1.bis II.4. besitzen als $\alpha$-Aminosäurederivate ein asymmetrisches Kohlenstoffatom und können daher sowohl als RAcemate als auch als optisch reine Isomere vorliegen und eingesetzt werden. So ist z.B. das optisch reine R-Enantiomere der Verbindung II.3. unter dem common name metalaxyl-M bekannt (C. Nuninger, G. Watson, N. Leadbitter und H. Ellgehausen, Proc. of Brighton Crop Protection onf. 1996, Vol. 1, S. 41-46) und unter den Handelsnamen Ridomil™ oder Apron™ XL kommerziell erhältlich.

Die Mischungen der Verbindungen Ia und II bzw. die gleichzeitige gemeinsame oder getrennte Verwendung der Verbindungen Ia und II zeichnen sich durch eine hervorragende Wirkung gegen ein breites Spektrum von pflanzenpathogenen Pilzen, insbesondere aus der Klasse der Ascomyceten, Deuteromyceten, Phycomyceten und Basidiomyceten, aus. Sie sind z.T. systemisch wirksam und können daher auch als Blatt- und Bodenfungizide eingesetzt werden.

Besondere Bedeutung haben sie für die Bekämpfung einer Vielzahl von Pilzen an verschiedenen Kulturpflanzen wie Baumwolle, Gemüsepflanzen (z.B. Gurken, Bohnen und Kürbisgewächse), Gerste, Gras, Hafer, Kaffee, Mais, Obstpflanzen, Reis, Roggen, Soja, Wein, Weizen, Zierpflanzen, Zuckerrohr und einer Vielzahl von Samen.

Insbesondere eignen sie sich zur Bekämpfung der folgenden pflanzenpathogenen Pilze: Erysiphe graminis (echter Mehltau) an Getreide, Erysiphe cichoracearum und Sphaerotheca fuliginea an Kürbisgewächsen, Podosphaera leucotricha an Äpfeln, Uncinula necator an Reben, Puccinia-Arten an Getreide, Rhizoctonia-Arten an Baumwolle, Reis und Rasen, Ustilago-Arten an Getreide und Zukkerrohr, Venturia inaequalis (Schorf) an Äpfeln, Helminthosporium-Arten an Getreide, Septoria nodorum an Weizen, Botrytis cinera (Grauschimmel) an Erdbeeren, Gemüse, Zierpflanzen und Reben, Cercospora arachidicola an Erdnüssen, Pseudocercosporella herpotrichoides an Weizen und Gerste, Pyricularia oryzae an Reis, Phytophthora infestans an Kartoffeln und Tomaten, Pseudoperonospora-Arten an Kürbisgewächsen und Hopfen, Plasmopara viticola an Reben, Alternaria-Arten an Gemüse und Obst sowie Fusarium- und Verticillium-Arten.

Sie sind außerdem im Materialschutz (z.B. Holzschutz) anwendbar, beispielsweise gegen Paecilomyces variotii.

Die Verbindungen Ia und II können gleichzeitig gemeinsam oder getrennt oder nacheinander aufgebracht werden, wobei die Reihenfolge bei getrennter Applikation im allgemeinen keine Auswirkung auf den Bekämpfungserfolg hat.

Die Verbindungen Ia und II werden üblicherweise in einem Gewichtsverhältnis von 0.05:1 bis 20:1, vorzugsweise 0.1:1 bis 10:1, insbesondere 0.2:1 bis 5:1 (II:I) angewandt.

Die Aufwandmengen der erfindungsgemäßen Mischungen liegen je nach Art des gewünschten Effekts für die Verbindungen Ia bei 0.005 bis 0.5 kg/ha, vorzugsweise 0.05 bis 0.5 kg/ha, insbesondere 0.05 bis 0.2 kg/ha.

Die Aufwandmengen für die Verbindungen II liegen entsprechend in der Regel bei 0.005 bis 1 kg/ha, vorzugsweise 0.05 bis 1 kg/ha, insbesondere 0.05 bis 0.5 kg/ha.

Bei der Saatgutbehandlung werden im allgemeinen Aufwandmengen an Mischung von 0,001 bis 100 g/kg Saatgut, vorzugsweise 0,01 bis 50 g/kg, insbesondere 0,01 bis 10 g/kg verwendet.

Sofern für Pflanzen pathogene Schadpilze zu bekämpfen sind, erfolgt die getrennte oder gemeinsame Applikation der Verbindungen Ia und II oder der Mischungen aus den Verbindungen Ia und II durch Besprühen oder Bestäuben der Samen, der Pflanzen oder der Böden vor oder nach der Aussaat der Pflanzen oder vor oder nach dem Auflaufen der Pflanzen.

Die erfindungsgemäßen fungiziden synergistischen Mischungen bzw. die Verbindungen Ia und II können beispielsweise in Form von direkt versprühbaren Lösungen, Pulver und Suspensionen oder in Form von hochprozentigen wäßrigen, öligen oder sonstigen Suspensionen, Dispersionen, Emulsionen, Öldispersionen, Pasten, Stäubemitteln, Streumitteln oder Granulaten aufbereitet und durch Versprühen, Vernebeln, Verstäuben, Verstreuen oder Gießen angewendet werden. Die Anwendungsform ist abhängig vom Verwendungszweck; sie soll in jedem Fall eine möglichst feine und gleichmäßige Verteilung der erfindungsgemäßen Mischung gewährleisten.

Die Formulierungen werden in an sich bekannter Weise hergestellt, z.B. durch Zugabe von Lösungsmitteln und/oder Trägerstoffen. Den Formulierungen werden üblicherweise inerte Zusatzstoffe wie Emulgiermittel oder Dispergiermittel beigemischt.

Als oberflächenaktive Stoffe kommen die Alkali-, Erdalkali-, Ammoniumsalze von aromatischen Sulfonsäuren, z.B. Lignin-, Phenol-, Naphthalin- und Dibutylnaphthalinsulfonsäure, sowie von Fettsäuren, Alkyl- und Alkylarylsulfonaten, Alkyl-, Lauryletherund Fettalkoholsulfaten, sowie Salze sulfatierter Hexa-, Heptaund Octadecanole oder Fettalkoholglycolethern, Kondensationsprodukte von sulfoniertem Naphthalin und seinen Derivaten mit Formaldehyd, Kondensationsprodukte des Naphthalins bzw. der Naphthalinsulfonsäuren mit Phenol und Formaldehyd, Polyoxyethylenoctylphenolether, ethoxyliertes Isooctyl-, Octyl- oder Nonylphenol, Alkylphenol- oder Tributylphenylpolyglycolether, Alkylarylpolyetheralkohole, Isotridecylalkohol, Fettalkoholethylenoxid- Kondensate, ethoxyliertes Rizinusöl, Polyoxyethylenalkylether oder Polyoxypropylen, Laurylalkoholpolyglycoletheracetat. Sorbitester, Lignin-Sulfitablaugen oder Methylcellulose in Betracht.

Pulver, Streu- und Stäubemittel können durch Mischen oder gemeinsames Vermahlen der Verbindungen Ia und II oder III oder IV oder der Mischung aus den Verbindungen Ia und II, III oder IV mit einem festen Trägerstoff hergestellt werden.

Granulate (z.B. Umhüllungs-, Imprägnierungs- oder Homogengranulate) werden üblicherweise durch Bindung des Wirkstoffs oder der Wirkstoffe an einen festen Trägerstoff hergestellt.

Als Füllstoffe bzw. feste Trägerstoffe dienen beispielsweise Mineralerden wie Silicagel, Kieselsäuren, Kieselgele, Silikate, Talkum, Kaolin, Kalkstein, Kalk, Kreide, Bolus, Löß, Ton, Dolomit, Diatomeenerde, Kalzium- und Magnesiumsulfat, Magnesiumoxid, gemahlene Kunststoffe, sowie Düngemittel wie Ammoniumsulfat, Ammoniumphosphat, Ammoniumnitrat, Harnstoffe und pflanzliche Produkte wie Getreidemehl, Baumrinden-, Holz- und Nußschalenmehl,

Cellulosepulver oder andere feste Trägerstoffe.

Die Formulierungen enthalten im allgemeinen 0,1 bis 95 Gew.-%, vorzugsweise 0,5 bis 90 Gew.-% einer der Verbindungen Ia oder II bzw. der Mischung aus den Verbindungen Ia und II . Die Wirkstoffe werden dabei in einer Reinheit von 90 % bis 100 %, vorzugsweise 95 % bis 100 % (nach NMR- oder HPLC-Spektrum) eingesetzt.

Die Verbindungen Ia oder II bzw. die Mischungen oder die entsprechenden Formulierungen werden angewendet, indem man die Schadpilze, die von ihnen freizuhaltenden Pflanzen, Samen, Böden, Flächen, Materialien oder Räume mit einer fungizid wirksamen Menge der Mischung, bzw. der Verbindungen Ia und II bei getrennter Ausbringung, behandelt. Die Anwendung kann vor oder nach dem Befall durch die Schadpilze erfolgen.

Die fungizide Wirkung der Verbindung und der Mischungen läßt sich durch folgende Versuche zeigen:

Kurative Wirksamkeit gegen Plasmopara viticola

Blätter von Topfreben der Sorte "Müller-Thurgau" wurden mit einer wäßrigen Zoosporenaufschwemmung von Plasmopara viticola inokuliert. Anschließend wurden die Reben für 48 Stunden in eine wasserdampfgesättigten Kammer bei 22 - 24°C gestellt. Dann wurden sie aus den Kammern herausgenommen und nach dem Abtrocknen mit wäßriger Wirkstoffaufbereitung, die mit einer Stammlösung aus 10 % Wirkstoff, 63 % Cyclohexanon und 27 % Emulgiermittel angesetzt wurde, bis zur Tropfnäße besprüht. Nach dem Abtrocknen des Spritzbelages wurden die Pflanzen für 5 Tage im Gewächshaus bei Temperaturen zwischen 20 und 30°C weiter kultiviert. Nach dieser Zeit wurden die Pflanzen zur Beschleunigung des Sporangienträgerausbruchs abermals für 16 Stunden in eine feuchte Klimakammer gestellt. Dann wurde das Ausmaß der Befallsentwicklung auf den Blattunterseiten visuell in % ermittelt.

Die Auswertung erfolgt durch Feststellung der befallenen Blattflächen in Prozent. Diese Prozent-Werte werden in Wirkungsgrade umgerechnet. Die zu erwartenden Wirkungsgrade der Wirkstoffmischungen werden nach der Colby Formel [R.S. Colby, Weeds 15, 20-22 (1967)] ermittelt und mit den beobachteten Wirkungsgraden verglichen.

Colby Formel:

$$E = x + y + z - x \cdot y \cdot z / 100$$

E zu erwartender Wirkungsgrad, ausgedrückt in % der unbehandelten Kontrolle, beim Einsatz der Mischung aus den Wirkstoffen A, B und C in den Konzentrationen a, b und c

x der Wirkungsgrad, ausgedrückt in % der unbehandelten Kontrolle, beim Einsatz des Wirkstoffs A in der Konzentration a

y der Wirkungsgrad, ausgedrückt in % der unbehandelten Kontrolle, beim Einsatz des Wirkstoffs B in der Konzentration b

z der Wirkungsgrad, ausgedrückt in % der unbehandelten Kontrolle, beim Einsatz des Wirkstoffs C in der Konzentration c

Der Wirkungsgrad (W) wird nach der Formel von Abbot wie folgt berechnet:

$$W = (1 - \alpha) \bullet 100 / \beta$$

$\alpha$ entspricht dem Pilzbefall der behandelten Pflanzen in % und

$\beta$ entspricht dem Pilzbefall der unbehandelten (Kontroll-) Pflanzen in %

Bei einem Wirkungsgrad von 0 entspricht der Befall der behandelten Pflanzen demjenigen der unbehandelten Kontrollpflanzen; bei einem Wirkungsgrad von 100 weisen die behandelten Pflanzen keinen Befall auf.

Die Ergebnisse der Versuche sind den nachfolgenden Tabellen 2 und 3 zu entnehmen.

Tabelle 2

| Bsp. | Wirkstoff | Wirkstoffkonzentration in der Spritzbrühe in ppm | Wirkungsgrad in % der unbehandelten Kontrolle |
|---|---|---|---|
| 1V | Kontrolle (unbehandelt) | (73 % Befall) | 0 |
| 2V | Verbindung I.32 aus Tab. 1 (Ia.1) | 16 | 45 |
| | | 4 | 0 |
| | | 1 | 0 |
| 3V | Verbindung I.38 aus Tab. 1 (Ia.2) | 1 | 0 |
| 4V | II.2 (Ofurace) | 16 | 73 |
| | | 4 | 73 |
| | | 1 | 0 |
| 5V | II.3 (Metalaxyl) | 1 | 59 |

Tabelle 3

| Bsp. | erfindungsgemäße | beobachteter Wirkungsgrad | berechneter Wirkungsgrad*) |
|---|---|---|---|
| 6 | 16 ppm Ia.1 + 16 ppm II.2 | 96 | 85 |
| 7 | 4 ppm Ia.1 + 4 ppm II.2 | 96 | 73 |
| 8 | 1 ppm Ia.1 + 1 ppm II.2 | 30 | 0 |
| 9 | 1 ppm Ia.1 + 1 ppm II.3 | 90 | 59 |
| 10 | 1 ppm Ia.2 + 1 ppm II.2 | 40 | 0 |

*) berechnet nach der Colby-Formel

Aus den Ergebnissen des Versuches geht hervor, daß der beobachtete Wirkungsgrad in allen Mischungsverhältnissen höher ist, als nach der Colby-Formel vorausberechnete Wirkungsgrad.

**Patentansprüche**

**1.** Fungizide Mischung, enthaltend mindestens einen Wirkstoff ausgewählt aus

a$_1$) Carbamaten der Formel Ia,

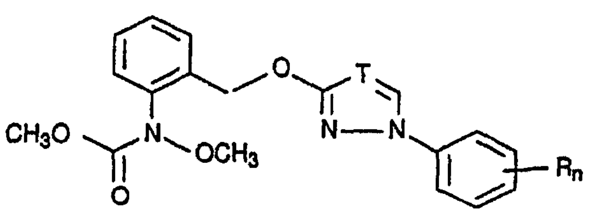

(Ia)

in der T CH oder N bedeutet, n für 0, 1 oder 2 steht und R Halogen, $C_1$-$C_4$-Alkyl oder $C_1$-$C_4$-Halogenalkyl bedeutet, wobei die Reste R verschieden sein können, wenn n für 2 steht,
und

b) mindestens einen Wirkstoff der Formeln II.1 bis II.5

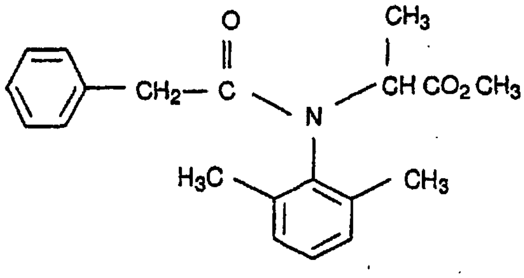

(II.1)

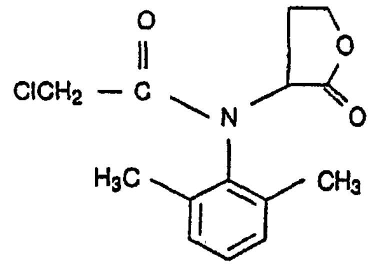

(II.2)

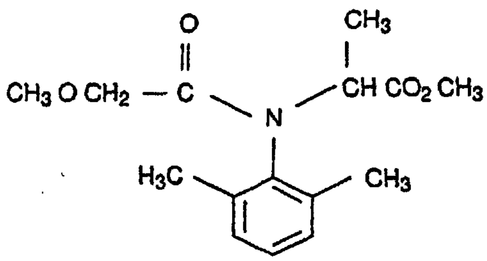

(II.3)

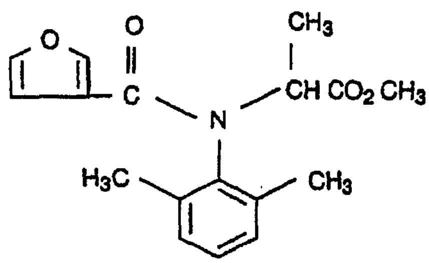

(II.4)

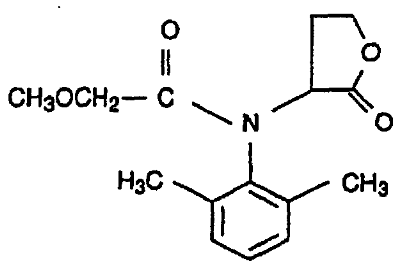

(II.5)

in einer synergistisch wirksamen Menge.

**2.** Fungizide Mischung nach Anspruch 1, enthaltend eine Verbindung der Formel II.1.

**3.** Fungizide Mischung nach Anspruch 1, enthaltend eine Verbindung der Formel II.2.

**4.** Fungizide Mischung nach Anspruch 1, enthaltend eine Verbindung der Formel II.3.

**5.** Fungizide Mischung nach Anspruch 1, enthaltend eine Verbindung der Formel II.4.

**6.** Fungizide Mischung nach Anspruch 1, enthaltend eine Verbindung der Formel II.5.

7. Verfahren zur Bekämpfung von Schadpilzen, **dadurch gekennzeichnet, daß** man die Schadpilze, deren Lebensraum oder die von ihnen freizuhaltenden Pflanzen, Samen, Böden, Flächen, Materialien oder Räume mit einer Verbindung der Formel I gemäß Anspruch 1 und mindestens einer Verbindung der Formeln II.1. bis II.5. gemäß Anspruch 1 behandelt.

8. Verfahren nach Anspruch 6, **dadurch gekennzeichnet, daß** man die Schadpilze, deren Lebensraum oder die von ihnen freizuhaltenden Pflanzen, Samen, Böden, Flächen, Materialien oder Räume mit 0,005 bis 0,5 kg/ha einer Verbindung I gemäß Anspruch 1 behandelt.

9. Verfahren nach Anspruch 6, **dadurch gekennzeichnet, daß** man die Schadpilze, deren Lebensraum oder die von ihnen freizuhaltenden Pflanzen, Samen, Böden, Flächen, Materialien oder Räume mit 0.005 bis 1 kg/ha mindestens einer Verbindung II gemäß Anspruch 1 behandelt.

## Claims

1. A fungicidal mixture, comprising at least one active compound selected from

a$_1$) carbamates of the formula Ia,

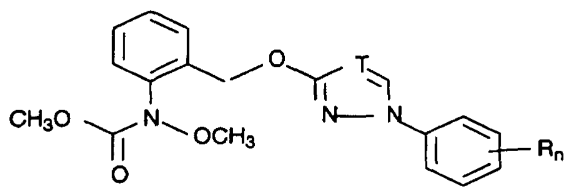

(Ia)

where T is CH or N, n is 0, 1 or 2 and R is halogen, $C_1$-$C_4$-alkyl or $C_1$-$C_4$-haloalkyl, it being possible for the radicals R to be different if n is 2,
and

b) at least one active compound of the formulae II.1. to II.5.

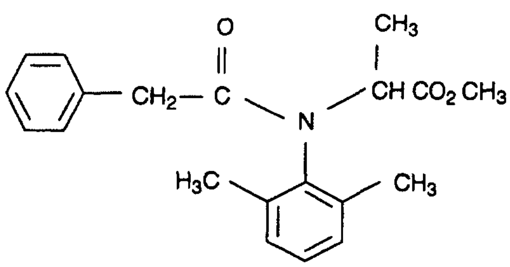

(II.1)

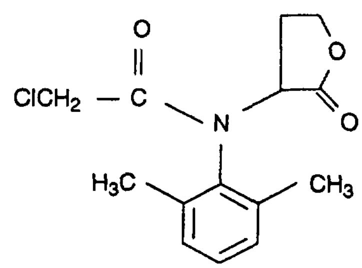

(II.2)

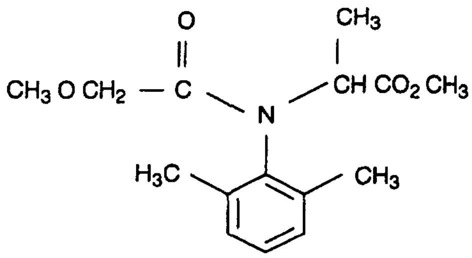

(II.3)

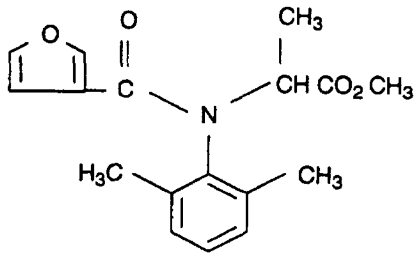

(II.4)

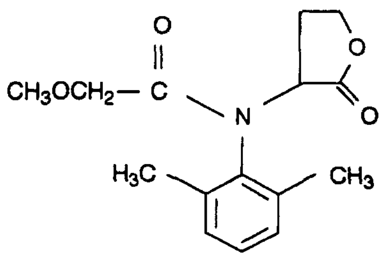

(II.5)

in a synergistically effective amount.

2. A fungicidal mixture as claimed in claim 1, comprising a compound of the formula II.1.

3. A fungicidal mixture as claimed in claim 1, comprising a compound of the formula II.2.

4. A fungicidal mixture as claimed in claim 1, comprising a compound of the formula II.3.

5. A fungicidal mixture as claimed in claim 1, comprising a compound of the formula II.4.

6. A fungicidal mixture as claimed in claim 1, comprising a compound of the formula II.5.

7. A method for controlling harmful fungi, which comprises treating the fungi, their habitat or the plants, seeds, soils, areas, materials or spaces to be kept free from them with a compound of the formula I as set forth in claim 1 and at least one compound of the formulae II.1. to II.5. as set forth in claim 1.

8. A method as claimed in claim 6, wherein the harmful fungi, their habitat or the plants, seeds, soils, areas, materials or spaces to be kept free from them are treated with from 0.005 to 0.5 kg/ha of a compound I as set forth in claim 1.

9. A method as claimed in claim 6, wherein the harmful fungi, their habitat or the plants, seeds, soils, areas, materials or spaces to be kept free from them are treated with from 0.005 to 1 kg/ha of at least one compound II as set forth in claim 1.

**Revendications**

1. Mélange fongicide, contenant au moins une substance active choisie parmi

$a_1$) des carbamates de formule Ia,

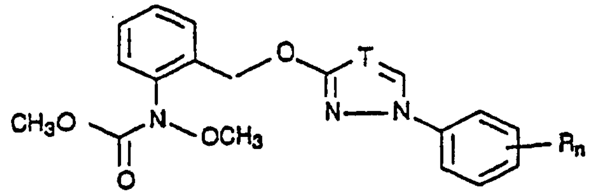

(Ia)

où T désigne CH ou N, n vaut 0, 1 ou 2 et R représente un groupe halogéno, alkyle en $C_1$-$C_4$ ou halogénoalkyle en $C_1$-$C_4$, tandis que les restes R peuvent être différents lorsque n vaut 2, et

b) au moins une substance active de formules II.1 à II.5

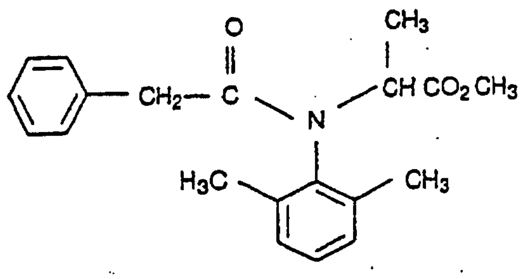

(II.1)

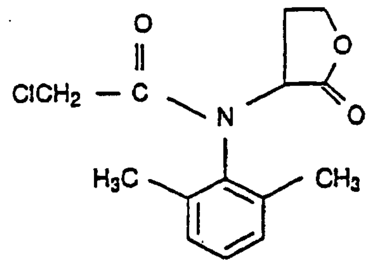

(II.2)

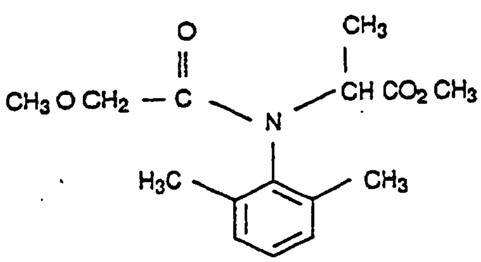

(II.3)

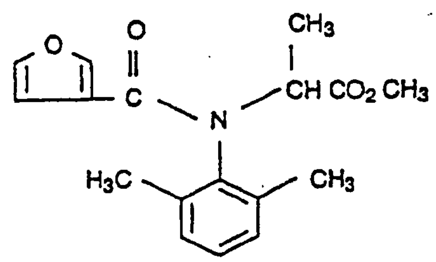

(II.4)

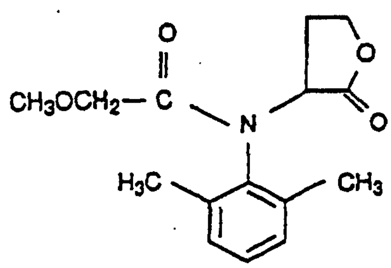

(II.5)

en une quantité à efficacité synergique.

2. Mélange fongicide selon la revendication 1, contenant un composé de formule II.1.

3. Mélange fongicide selon la revendication 1, contenant un composé de formule II.2.

4. Mélange fongicide selon la revendication 1, contenant un composé de formule II.3.

5. Mélange fongicide selon la revendication 1, contenant un composé de formule II.4.

6. Mélange fongicide selon la revendication 1, contenant un composé de formule II.5.

7. Procédé pour la lutte contre les champignons nuisibles, **caractérisé par le fait qu'**on traite les champignons nuisibles, leur biotope ou les plantes, semences, sols, surfaces, matériaux ou espaces qui doivent ne pas en contenir avec un composé de formule I selon la revendication I et au moins un composé de formules II.1. à II.5. selon la revendication 1.

8. Procédé selon la revendication 6, **caractérisé par le fait qu'**on traite les champignons nuisibles, leur biotope ou les plantes, semences, sols, surfaces, matériaux ou espaces devant ne pas en contenir avec 0,005 à 0,5 kg/ha d'un composé I selon la revendication 1.

9. Procédé selon la revendication 6, **caractérisé par le fait qu'**on traite les champignons nuisibles, leur biotope ou les plantes, semences, sols, surfaces, matériaux ou espaces devant ne pas en contenir avec 0,005 à 1 kg/ha d'un composé II selon la revendication 1.